# FASCICULE DE BREVET EUROPEEN

(11) **EP 0 466 622 B1**
(45) Date de publication et mention de la délivrance du brevet: **22.03.1995**
(21) Numéro de dépôt: 91440037.9
(22) Date de dépôt: 13.05.1991
(51) Int. Cl.: B60B 7/20, F16C 35/06

(54) **Enjoliveur pour roues de véhicules**
Kraftfahrzeugradzierblende
Vehicle wheel hubcap

(30) Priorité: 14.05.1990 FR 9006147
(43) Date de publication de la demande: 15.01.1992
(73) Titulaire: Levy, Serge, F-74240 Gaillard (FR); Alaoui Mrani, Mustapha, Ch-1009 Pully Lausanne (CH)
(72) Inventeur: Levy, Serge, F-74240 Gaillard (FR); Alaoui Mrani, Mustapha, Ch-1009 Pully Lausanne (CH)
(74) Mandataire: Nuss, Pierre

(56) Documents cités:
- AT-B- 384 399
- DE-C- 468 263
- DE-U- 8 712 675
- FR-A- 631 899
- FR-A- 1 069 953
- GB-A- 192 621
- US-A- 1 515 419
- US-A- 2 869 262
- US-A- 3 443 848
- US-A- 3 749 463
- PATENT ABSTRACTS OF JAPAN, vol. 9, no. 176, (M-398)[1899] 20 juillet 1985;& JP-A-60 47 701 (SHINSEI SANGYO) 15-03-1985

## Description

La présente invention concerne le domaine des accessoires pour véhicules, notamment automobiles, et a pour objet un enjoliveur pour roues de véhicules.

Actuellement, la plupart des véhicules sont équipés d'enjoliveurs au niveau de leurs roues, lesquels sont généralement agrémentés de motifs décoratifs.

Dans certains cas, par contre, lesdits enjoliveurs sont avantageusement utilisés comme supports publicitaires mobiles, notamment dans le cas de véhicules de fonction ou de service.

Néanmoins, du fait de l'assujettissement en rotation desdits enjoliveurs avec les roues du véhicule, les motifs, sigles et/ou textes publicitaires et/ou informatifs ne peuvent être ni reconnus, ni lus, par les personnes extérieures au véhicule lorsque celui-ci se déplace et traverse leur champ de vision. De plus, une reconnaissance et/ou une lecture aisées desdits motifs, sigles et/ou textes publicitaires et/ou informatifs lorsque le véhicule est à l'arrêt, n'est possible que si les roues dudit véhicule sont arrêtées dans une position angulaire donnée correspondant à une position à l'endroit des inscriptions disposées sur les enjoliveurs concernés.

Par ailleurs, ces derniers ne couvrent, en général, qu'une partie de la surface totale des jantes des roues correspondantes.

Il existe également des enjoliveurs comportant des motifs décoratifs réalisés de telle manière qu'ils n'apparaissent que lorsque la roue correspondante tourne à une vitesse de rotation donnée, d'où il résulte une application très spécifique et une utilité très limitée.

Enfin, on connaît par le document FR-A-1 069 953 un enjoliveur pour roues de véhicules pouvant servir notamment de support publicitaire, et permettant la reconnaissance et/ou la lecture des motifs, sigles et/ou textes publicitaires et/ou informatifs, par une personne extérieure au véhicule, quelle que soit la vitesse de déplacement dudit véhicule ou, respectivement, la position de ses roues lorsqu'il est à l'arrêt.

L'enjoliveur décrit dans ce document est principalement constitué, d'une part, par un dispositif de fixation et de support solidaire de la jante ou du moyeu d'une roue d'un véhicule et, d'autre part, par un élément écran, essentiellement plan, monté sur ledit dispositif avec faculté de rotation et présentant une répartition asymétrique de sa masse par rapport à son axe de rotation, permettant audit élément écran de conserver une position angulaire fixe par rapport à l'horizontale, même en cas de rotation de ladite roue.

Toutefois, ce type d'enjoliveur ne permet pas d'attirer, de manière particulière, l'attention des personnes extérieures au véhicule lorsque ce dernier est à l'arrêt.

Le problème précité est précisément résolu par l'invention en prévoyant, pour un enjoliveur du type décrit ci-dessus, un dispositif d'animation, mécanique ou électrique, solidaire de l'élément écran et emmagasinant de l'énergie lors de la rotation de la roue.

En outre, l'enjoliveur conforme à l'invention devra également, d'une part, être constitué par un nombre restreint de pièces, d'autre part, présenter une grande fiabilité au montage ainsi qu'une bonne stabilité lors de la rotation de la roue et, enfin, être assemblé avec la roue du véhicule correspondant de manière à autoriser un montage et un démontage aisés et rapides du support publicitaire.

L'invention sera mieux comprise grâce à la description ci-après, qui se rapporte aux modes de réalisation préférés, donnés à titre d'exemple non limitatif, et expliqués avec référence aux dessins schématiques annexés, dans lesquels :
la figure 1 est une vue schématique en élévation latérale et en coupe de l'enjoliveur conforme à l'invention, monté sur une roue de véhicule ;
la figure 2 est une vue éclatée en perspective de l'enjoliveur représenté schématiquement à la figure 1, selon un premier mode de réalisation ;
la figure 3 est une vue en élévation latérale de l'arbre support faisant partie de l'enjoliveur représenté à la figure 2 ;
la figure 4 est une vue en élévation latérale et en coupe de l'élément écran faisant partie de l'enjoliveur représenté à la figure 2 ;
la figure 5 est une vue en élévation latérale et en coupe de l'enjoliveur représenté schématiquement à la figure 1, selon un deuxième mode de réalisation ;
la figure 6 est une vue éclatée en perspective de l'enjoliveur représenté à la figure 5 ;
la figure 7 est une vue en élévation latérale et en coupe d'un dispositif d'animation faisant partie de l'invention, et,
la figure 8 est une vue en élévation frontale d'un élément écran faisant également partie de l'invention.

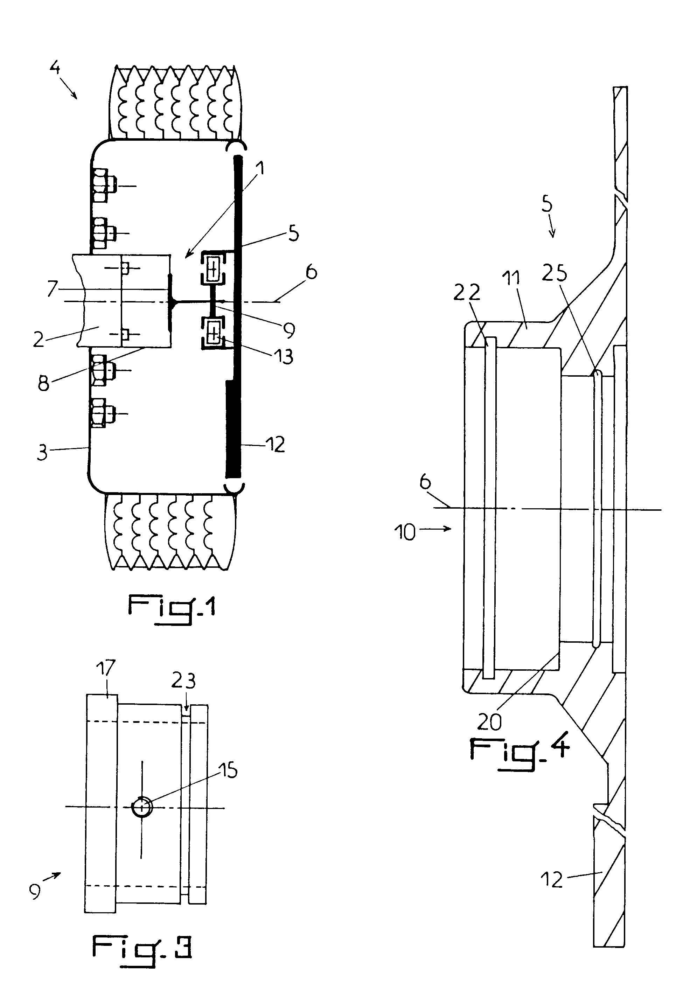

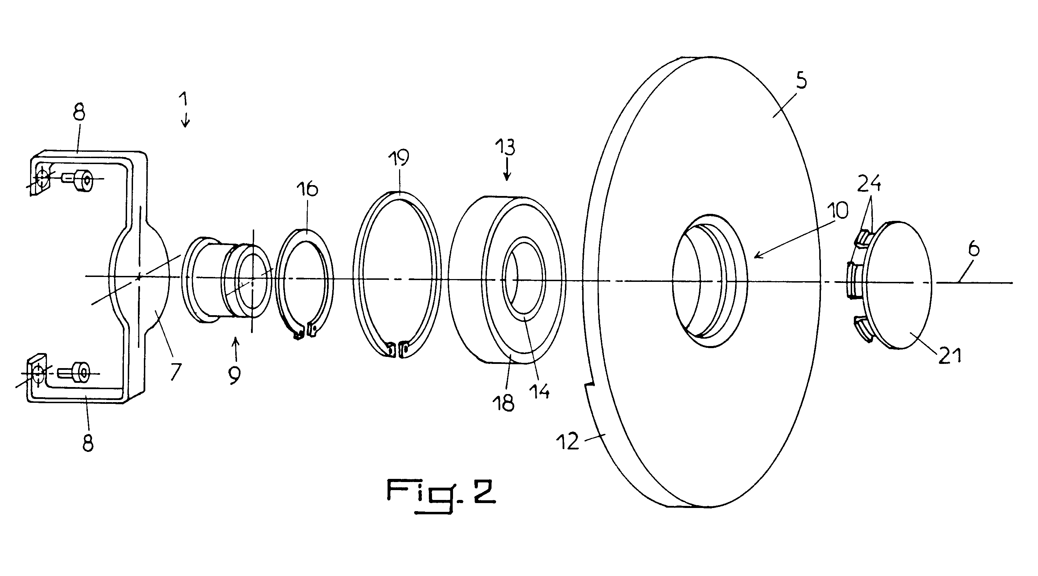

Comme le montre notamment la figure 1 des dessins annexés, l'enjoliveur est principalement constitué, d'une part, par un dispositif 1 de fixation et de support solidaire du moyeu 2 ou de la jante 3 d'une roue 4 d'un véhicule et, d'autre part, par un élément écran 5, essentiellement plan, monté sur ledit dispositif 1 avec faculté de rotation et présentant une répartition asymétrique de sa masse par rapport à son axe de rotation 6, permettant audit élément écran 5 de conserver une position angulaire fixe par rapport à l'horizontale, même en cas de rotation de ladite roue 4.

Conformément à l'invention, l'enjoliveur comporte, en outre, un dispositif d'animation 32, mécanique ou électrique, solidaire de l'élément écran 5 et emmagasinant de l'énergie lors de la rotation de la roue 4, cette énergie étant, par la suite, restituée, dès que la roue 4 se trouve à l'arrêt, sous forme, par exemple, de mise en mouvement d'un élément mobile décoratif 33.

Selon une première caractéristique de l'invention, représentée aux figures 2 et 3 des dessins annexés, le dispositif 1 de fixation et de support est composé, d'une part, d'une plaque de base 7 fixée, soit directement, soit par l'intermédiaire d'au moins deux bras 8 au moyeu 2 ou à la jante 3 de la roue 4 du véhicule et, d'autre part, d'un arbre support 9 de forme cylindrique rapporté sur ladite plaque de base 7, et muni d'une butée circulaire externe 17, l'axe de révolution dudit arbre support 5 étant confondu avec l'axe de rotation de la roue 4 correspondante.

La plaque de base 7 et les bras 8, avantageusement au nombre de deux, peuvent être fabriqués, par exemple, d'une seule pièce et être obtenus par découpage d'une plaque métallique correspondante et pliages consécutifs des bras 8.

La fixation des bras 8 sur le moyeu 2 ou la jante 3 ainsi que celle de l'arbre support 9 sur la plaque de base 7 sont réalisées selon des modes de fixation connus par l'homme de l'art tels que, par exemple, vissage, soudage, collage, etc...

Comme le montrent les figures 2 et 4 des dessins annexés, l'élément écran 5 se présente sous la forme d'un disque troué pourvu, au niveau de son orifice central 10, d'une bague de montage 11, le diamètre dudit disque étant sensiblement égal au diamètre interne de la roue 4, de manière à recouvrir totalement la jante 3 de ladite roue 4 (figure 1). En outre, l'élément écran 5 présente une surépaisseur de matière 12 s'étendant sur une partie seulement de sa surface et pouvant présenter des formes diverses telles que, par exemple, une portion de couronne ou encore un secteur angulaire, d'où il résulte une répartition asymétrique de la masse dudit élément écran 5 autour de son axe de rotation 6.

Selon une autre caractéristique de l'invention, la liaison en rotation entre le dispositif 1 de fixation et de support et l'élément écran 5 est réalisée au moyen d'un roulement 13 à billes, à aiguilles ou autre, monté, par exemple, avec serrage, d'une part, dans la bague de montage 11 dudit élément écran 5 et, d'autre part, sur l'arbre support 9 dudit dispositif 1 de fixation et de support (figure 1). Néanmoins, le roulement 13 peut également être monté de manière coulissante sur l'arbre support 9, la solidarisation en rotation dudit arbre support 9 avec l'anneau intérieur 14 dudit roulement 13 étant réalisée, par exemple, au moyen d'une vis pointeau à six pans creux disposée dans un orifice fileté radial 15 ménagé dans la paroi de l'arbre support 9 creux.

Conformément à une caractéristique de l'invention, l'anneau extérieur 18 dudit roulement 13 est assujetti dans la bague de montage 11 de l'élément écran 5 au moyen d'un circlip intérieur 19 coopérant avec une butée interne 20, sous la forme d'un décrochement intérieur de ladite bague de montage 11.

Selon un premier mode de réalisation de l'invention, représenté sur la figure 2 des dessins annexés, l'anneau intérieur 14 du roulement 13 est asujetti sur l'arbre support 9 au moyen d'un circlip extérieur 16 disposé dans une rainure 23 dudit arbre support 9 et coopérant avec la butée circulaire externe 17, se présentant, par exemple, sous la forme d'un décrochement périphérique dudit arbre support 9.

Dans ce cas, l'enjoliveur comporte, en outre, un couvercle 21 disposé de manière amovible dans l'orifice central 10 de l'élément écran 5 et permettant de constituer une surface extérieure plane et continue dudit élément écran 5.

Ce dernier, ainsi que le couvercle 21, peuvent être avantageusement réalisés en une matière plastique connue sous la désignation ABS, c'est-à-dire en terpolymère d'acrylonitrile, de butadiène et de styrène, l'élément écran 5 pouvant être fabriqué d'une seule pièce avec la bague de montage 11 et être obtenu, notamment, selon une technique de moulage par injection.

Ainsi, le montage de l'enjoliveur sur une roue 4 d'un véhicule consiste, après la fixation de l'arbre support 9 sur la plaque de base 7 et le montage de ce dernier sur le moyeu 2 ou la jante 3 d'une roue 4, à réaliser, par exemple, les opérations suivantes (figures 2, 3 et 4) :
- mise en place du roulement 13 dans la bague de montage 11 de l'élément écran 5, en appui contre la butée 20 ;
- mise en place du circlip intérieur 19 dans une rainure circonférentielle intérieure 22 correspondante de la bague de montage 11 (figure 4) ;
- montage de l'ensemble élément écran 5 - roulement 13 sur l'arbre support 9, l'anneau intérieur 14 du roulement 13 étant en appui sur la butée externe 17 dudit arbre support 9 ;
- mise en place du circlip extérieur 16 dans une rainure circonférentielle extérieure 23 correspondante de l'arbre support 9 ;
- enfoncement du couvercle 21 dans l'orifice 10 de l'élément écran 5 jusqu'à encliquetage des pattes élastiques 24 dudit couvercle 21 dans une rainure intérieure 25 correspondante dudit élément écran 5, et
- mise en place de motifs, sigles et/ou textes publicitaires et/ou informatifs, notamment sous la forme d'affiches autocollantes, sur la surface extérieure de l'élément écran 5.

Le démontage dudit enjoliveur consisterait à effectuer les étapes précédentes dans l'ordre inverse et en réalisant les opérations inverses.

Néanmoins, pour démonter l'élément écran 5, afin de changer l'affiche publicitaire et/ou informative ou de remplacer un ou plusieurs éléments dont l'usure a été constatée, il suffit en fait de retirer le couvercle 21 puis de desserrer et d'extraire le circlip extérieur 16.

Ainsi, le changement des éléments écran 5 peut être effectué avec un minimum de manipulations et en un laps de temps extrêmement court. En outre, la mise en oeuvre de circlips 16, 19 pour l'assemblage de l'enjoliveur conforme à l'invention assure une grande fiabilité dans le temps au montage ainsi réalisé.

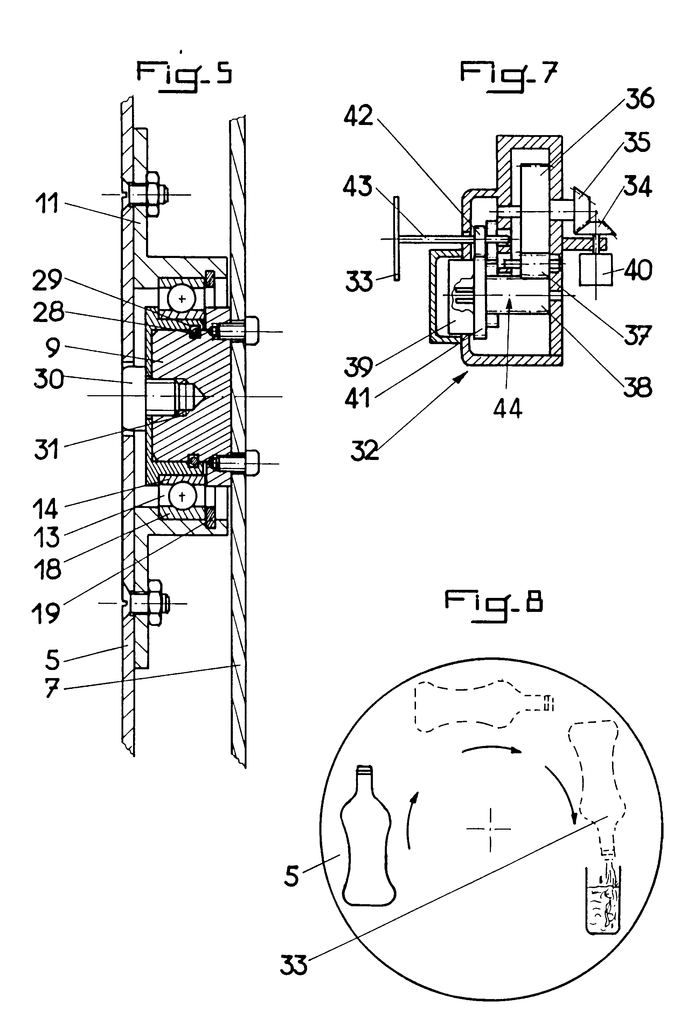

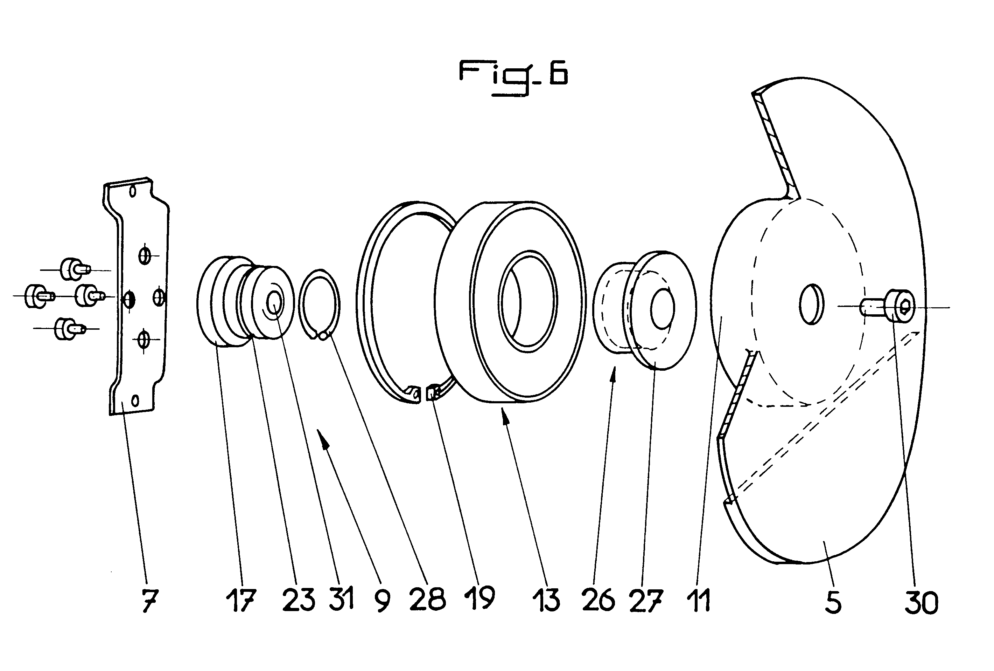

Selon un second mode de réalisation de l'invention, représenté aux figures 5 et 6 des dessins annexés, le montage du roulement 13 sur l'arbre support 9 est réalisé au moyen d'une pièce intermédiaire 26 essentiellement annulaire, disposée avec ajustement entre l'anneau intérieur 14 du roulement 13 et l'arbre support 9 et délimité, d'un côté, par un disque troué 27, dont le diamètre correspond sensiblement à celui de l'anneau intérieur 14.

Ainsi, l'anneau intérieur 14 du roulement 13 se trouve bloqué entre la butée circulaire externe 17 de l'arbre support 9 et le disque troué 27.

Conformément à une caractéristique de l'invention, et comme le montre plus particulièrement la figure 5 des dessins annexés, l'assemblage de la pièce intermédiaire 26 avec l'arbre support 9 est réalisé, d'une part, au moyen d'un jonc fendu 28 disposé dans une rainure extérieure 23 de l'arbre support 9 et s'étendant partiellement dans une rainure intérieure 29 de la pièce intermédiaire 26 et, d'autre part, au moyen d'une vis 30 s engageant dans un orifice fileté axial 31 de l'arbre support 9, et assujettissant le disque troué 27 audit arbre support 9.

Dans ce cas, le montage de l'enjoliveur sur une roue 4 consiste, après mise en place du dispositif 1 de fixation et de support sur le moyeu 2 ou la jante 3 de ladite roue 4 (figures 5 et 6) :
- à disposer le jonc 28 dans la rainure 23 de l'arbre support 9 ;
- à introduire la pièce intermédiaire 26 dans l'anneau intérieur du roulement 13 ;
- à mettre en place le roulement 13 dans la bague de montage 11 de l'élément écran 5, en appui contre la butée 20 ;
- puis à disposer le circlip intérieur 19 dans une rainure circonférentielle intérieure 22 correspondante de la bague de montage 11 ;
- à emmancher l'ensemble élément écran 5 - pièce intermédiaire 26 - roulement 13 - circlip intérieur 19 sur l'arbre support 9 jusqu'au clippage du jonc 28 dans la rainure 29 de la pièce intermédiaire 26;
- et enfin, à engager la vis 30, avantageusement du type à six pans creux, dans l'orifice fileté 31 de l'arbre et à la visser jusqu'au serrage.

Du fait de sa constitution, l'enjoliveur peut, conformément à l'invention, avantageusement être monté partiellement en deux opérations distinctes, permettant, dans un premier temps, de réaliser deux sous-ensembles d'éléments, à savoir le dispositif 1 de fixation et de support et le jonc 28, d'une part, et, l'élément écran 5, le roulement 13, la pièce intermédiaire 26 et le circlip 19, d'autre part.

Ces sous-ensembles peuvent alors être aisément assemblés entre eux par simple emmanchement à clippage, suivi d'un vissage, cette opération pouvant être effectuée très rapidement. De même, le changement des éléments écrans 5 et la maintenance des enjoliveurs conformes à l'invention peuvent être effectués en une durée minimale et avec un minimum de manipulations.

En effet, le démontage de l'élément écran 5 s'effectue après enlèvement de la vis 6, par un mouvement de rétraction brusque, libérant la pièce intermédiaire 26 du jonc 28. En pratique, il est ainsi possible de procéder au remplacement d'un élément écran 5 par un autre, en vue d'un changement d'affiche publicitaire par exemple, en moins de 20 secondes.

Par ailleurs, l' assemblage des deux sous-ensembles au moyen du jonc 28 et de la vis 30, entraîne une fiabilité élevée à l'utilisation et empêche tout démontage involontaire dudit élément écran 5.

Conformément à une première variante de réalisation de l'invention, et comme le montre plus particulièrement la figure 7 des dessins annexés, le dispositif d'animation 32 est principalement constitué, d'une part, par une chaîne cinématique d'entrée, composée de plusieurs engrenages successifs coopérant 34 à 38, permettant de charger un ressort 39 pourvu d'un limiteur de couple à partir d'un galet 40 entraîné par la jante 3 de la roue 4 en mouvement et, d'autre part, par une chaîne cinématique de sortie 41, 42 consistant essentiellement en un ou plusieurs engrenages permettant, dès l'arrêt de la roue 4, d'actionner, au moyen du ressort 39, au moins une pièce 43 supportant un élément décoratif et/ou informatif 33, l'indépendance des deux chaînes cinématiques entre elles étant obtenue au moyen d'un dispositif à roue libre 44.

Ainsi, il est possible, comme le montre la figure 8 des dessins annexés, de déplacer un élément décoratif 33 par rapport à l'élément écran 5, en réalisant ainsi une animation par déplacement, rotation, déformation, ou similaire, d'au moins un élément décoratif 33.

Selon une seconde variante de réalisation de l'invention, non représentée aux dessins annexés, le dispositif d'animation 32 est composé, d'une part, d'une génératrice électrique entraînée par la jante 3 de la roue 4 et chargeant un accumulateur correspondant, et d'autre part, d'un moteur électrique alimenté par ledit accumulateur et actionnant un élément mobile décoratif 33, le cas échéant, par l'intermédiaire d'un système réducteur de mouvement.

Le chargement de l'accumulateur sera donc fonction de la distance parcourue par le véhicule, et pourra permettre, non seulement, de mouvoir un élément décoratif 33 mais également de réaliser des effets lumineux.

Grâce à l'invention, il est donc possible de concevoir un enjoliveur pour roues de véhicules pouvant être utilisé, notamment, comme support publicitaire et permettant la reconnaissance et/ou la lecture de ladite publicité disposée sur ledit enjoliveur par des personnes extérieures au véhicule même lorsque celui-ci est en mouvement, du fait de la conservation d'une position angulaire fixe par rapport à l'horizontale de l'élément écran 5 supportant ladite publicité et ce, quelle que soit la position angulaire de la roue 4, ladite position angulaire dudit élément écran 5 correspondant a une disposition à l'endroit desdites inscriptions publicitaires et/ou informatives.

Par ailleurs, la fixité en rotation de l'élément écran 5 par rapport à l'horizontale, lors d'un déplacement du véhicule, d'une part, et, la mise en mouvement d'un élément décoratif 33 lors de l'arrêt dudit véhicule, d'autre part, auront également pour effet d'attirer l'attention des personnes extérieures au véhicule lorsque ce dernier traverse leur champ de vision.

L'enjoliveur conforme à l'invention est particulièrement bien adapté pour les roues des véhicules de transport en commun urbain, du fait de la dimension relativement importante desdites roues et de la vitesse de déplacement relativement faible desdits véhicules.

Bien entendu, l'invention n'est pas limitée aux modes de réalisation décrits et représentés aux dessins annexes. Des modifications restent possibles, notamment du point de vue de la constitution des divers éléments ou par substitution d'équivalents techniques, sans sortir pour autant du domaine de protection de l'invention comme definie par les revendications.

## Revendications

1. Enjoliveur pour roues de véhicules principalement constitué, d'une part, par un dispositif (1) de fixation et de support solidaire du moyeu (2) ou de la jante (3) d'une roue (4) d'un véhicule et, d'autre part, par un élément écran (5), essentiellement plan, monté sur ledit dispositif (1) avec faculté de rotation et présentant une répartition asymétrique de sa masse par rapport à son axe de rotation (6), permettant audit élément écran (5) de conserver une position angulaire fixe par rapport à l'horizontale, même en cas de rotation de ladite roue (4), enjoliveur caractérisé en ce qu'il comporte, en outre, un dispositif d'animation (32), mécanique ou électrique, solidaire de l'élément écran (5) et emmagasinant de l'énergie lors de la rotation de la roue (4).

2. Enjoliveur selon la revendication 1, caractérisé en ce que le dispositif (1) de fixation et de support est composé, d'une part, d'une plaque de base (7) fixée, soit directement, soit par l'intermédiaire d'au moins deux bras (8) au moyeu (2) ou à la jante (3) de la roue (4) du véhicule et, d'autre part, d'un arbre support (9), de forme cylindrique, rapporté sur ladite plaque de base (7) et muni d'une butée circulaire externe (17).

3. Enjoliveur selon l'une quelconque des revendications 1 et 2, caractérisé en ce que l'élément écran (5) se présente sous la forme d'un disque troué pourvu, au niveau de son orifice central (10), d'une bague de montage (11), ledit élément écran (5) comportant également une surépaisseur de matière (12) s'étendant sur une partie seulement de sa surface.

4. Enjoliveur selon l'une quelconque des revendications 1 à 3, caractérisé en ce que la liaison en rotation entre le dispositif (1) de fixation et de support et l'élément écran (5) est réalisée au moyen d'un roulement (13).

5. Enjoliveur selon la revendication 4, caractérisé en ce que l'anneau extérieur (18) du roulement (13) est assujetti dans la bague de montage (11) de l'élément écran (5) au moyen d'un circlip intérieur (19) coopérant avec une butée interne (20) de ladite bague de montage (11).

6. Enjoliveur selon l'une quelconque des revendications 4 et 5, caractérisé en ce que l'anneau intérieur (14) du roulement (13) est assujetti sur l'arbre support (9) au moyen d'un circlip extérieur (16) disposé dans une rainure (23) et coopérant avec la butée circulaire externe (17).

7. Enjoliveur selon la revendication 6, caractérisé en ce qu'il comporte un couvercle (21) disposé de manière amovible dans l'orifice central (10) de l'élément écran (5) et permettant de constituer une surface extérieure plane et continue dudit élément écran (5).

8. Enjoliveur selon l'une quelconque des revendications 4 et 5, caractérisé en ce que le montage du roulement (13) sur l'arbre support (9) est réalisé au moyen d'une pièce intermédiaire (26) essentiellement annulaire, disposée avec ajustement entre l'anneau intérieur (14) du roulement (13) et l'arbre support (9), et délimitée, d'un côté, par un disque troué (27), dont le diamètre correspondant sensiblement à celui de l'anneau intérieur (14).

9. Enjoliveur selon la revendication 8, caractérisé en ce que l'assemblage de la pièce intermédiaire (26) avec l'arbre support (9) est réalisé, d'une part, au moyen d'un jonc fendu (28) disposé dans une rainure extérieure (23) de l'arbre support (9) et s'étendant partiellement dans une rainure intérieure (29) de la pièce intermédiaire (26) et, d'autre part, au moyen d'une vis (30) s'engageant dans un orifice fileté axial (31) de l'arbre support (9).

10. Enjoliveur selon la revendication 1, caractérisé en ce que le dispositif d'animation (32) est composé, d'une part, d'une génératrice électrique entraînée par la jante (3) de la roue (4) et chargeant un accumulateur correspondant, et d'autre part, d'un moteur électrique alimenté par ledit accumulateur et actionnant un élément mobile décoratif (33), le cas échéant, par l'intermédiaire d'un système réducteur de mouvement.

11. Enjoliveur selon la revendication 1, caractérisé en ce que le dispositif d'animation (32) est principalement constitué, d'une part, par une chaîne cinématique d'entrée (34, 35, 36, 37, 38), composée de plusieurs engrenages successifs coopérants, permettant de charger un ressort (39) pourvu d'un limiteur de couple à partir d'un galet (40) entraîné par la jante (3) de la roue (4) en mouvement et, d'autre part, par une chaîne cinématique de sortie (41, 42) consistant essentiellement en un ou plusieurs engrenages permettant, dès l'arrêt de la roue (4), d'actionner, au moyen du ressort (39), au moins une pièce (43) supportant un élément décoratif et/ou informatif (33).

12. Enjoliveur selon l'une quelconque des revendications 1 à 11, caractérisé en ce que le dispositif (1) de fixation et de support ainsi que l'élément écran (5) sont réalisés, chacun, d'une seule pièce, l'élément écran (5) et, le cas échéant, le couvercle (21) étant avantageusement réalisés en une matière plastique connue sous la désignation ABS, c'est-à-dire en terpolymère d'acrylonitrile, de butadiène et de styrène.

## Claims

1. Wheel cover for the wheels of vehicles principally constituted, on the one hand, by a securement and support device (1) secured to the hub (2) or to the rim (3) of a vehicle wheel (4) and, on the other hand, by a shield element (5), substantially flat, mounted on said device (1) for rotation and having an asymmetric spacing of its mass relative to its axis of rotation (6), permitting said shield element (5) to maintain a fixed angular position relative to the horizontal, even during rotation of said wheel (4) the wheel cover being characterised in that it comprises moreover an animation device (32), mechanical or electrical, secured to the shield element (5) and storing energy during rotation of the wheel (4).

2. Wheel cover according to Claim 1, characterised in that the securement and support device (1) is comprised, on the one hand, of a base plate (7) fixed, either directly or by means of at least two arms (8) to the hub (2) or to the rim (3) of the wheel (4) of the vehicle and, on the other hand, of a support shaft (9), of cylindrical shape, removably mounted on said base plate (7) and provided with an external circular abutment (17).

3. Wheel cover according to any one of Claims 1 to 2, characterised in that the shield element (5) is in the form of a perforated disk provided, adjacent to its central opening (10), with a mounting ring (11), said shield element (5) also comprising a thickening of material (12) extending over only a portion of its surface.

4. Wheel cover according to any one of Claims 1 to 3, characterised in that the rotative connection between the securement and support device (1) and the shield element (5) is by means of a roller bearing (13).

5. Wheel cover according to Claim 4, characterised in that the external ring (18) of said roller bearing (13) is secured in the mounting ring (11) of the shield element (5) by means of an internal circlip (19) coacting with an internal abutment (20) of said mounting ring (11).

6. Wheel cover according to any one of Claims 4 and 5, characterised in that the internal ring (14) of the roller bearing (13) is secured on the support shaft (9) by means of an external circlip (16) disposed in a groove (23) and coacting with the external circular abutment (17).

7. Wheel cover according to Claim 6, characterised in that it comprises a cover (21) disposed removably in the central opening (10) of the shield element (5) and imparting a continuous flat external surface to said shield element (5).

8. Wheel cover according to any one of Claims 4 and 5, characterised in that the mounting of the roller bearing (13) on the support shaft (9) is effected by means of an essentially annular intermediate member (26) disposed adjustably between the internal ring (14) of the roller bearing (13) and the support shaft (9), and delimited on the one hand by a perforated disk (27), whose diameter corresponds substantially to that of the internal ring (14).

9. Wheel cover according to Claim 8, characterised in that the assembly of the intermediate member (26) with the support shaft (9) is effected on the one hand by means of a split ring (28) disposed in an external groove (23) of the support shaft (9) and extending partially into an internal groove (29) of the intermediate member (26) and on the other hand by means of a screw (30) engaging in an axial screw-threaded orifice (31) of the support shaft (9).

10. Wheel cover according to Claim 1, characterised in that the animation device (32) is comprised on the one hand by an electrical generator driven by the rim (3) of the wheel (4) and charging a corresponding accumulator, and on the other hand by an electric motor fed by said accumulator and actuating a movable decorative element (33) as the case may be by means of a movement reducing system.

11. Wheel cover according to Claim 1, characterised in that the animation device (32) is principally constituted on the one hand by an input drive train (34, 35, 36, 37, 38), comprised by several successive coacting gears, permitting loading of a spring (39) provided with a torque limiter through a roller (40) driven by the rim (3) of the moving wheel (4) and on the other hand by an output drive train (41, 42) consisting essentially of one or several gears permitting, when the wheel (4) stops, actuation by means of the spring (39) of at least one member (43) supporting a decorative and/or informative element (33).

12. Wheel cover according to any one of Claims 1 to 11, characterised in that the securement and support device (1) as well as the shield element (5) are each of a single piece, the shield element (5) and as the case may be the cover (21) being preferably produced from a plastic material designated ABS, which is to say a terpolymer of acrylonitrile, butadiene and styrene.

## Patentansprüche

1. Kraftfahrzeugradzierblende mit einer Einrichtung (1) zur Befestigung und festen Halterung an der Nabe (2) oder an der Felge (3) eines Rades (4) eines Fahrzeugs und mit einem im wesentlichen eben ausgebildeten, drehbar auf besagter Einrichtung (1) angebrachten Blendenelement (5), welches eine asymmetrische Verteilung seiner Masse in Bezug auf seine Drehachse (6) aufweist, welche dem Blendenelement (5) selbst im Falle einer Drehung des erwähnten Rades (4) die Beibehaltung einer Winkellage in Bezug auf die Horizontale ermöglicht, dadurch gekennzeichnet, daß die Kraftfahrzeugradzierblende außerdem eine mechanische oder elektrische Animationseinrichtung (32) aufweist, welche einstückig mit dem Blendenelement (5) ausgebildet ist und bei Rotation des Rades (4) Energie speichert.

2. Kraftfahrzeugradzierblende nach Anspruch 1, dadurch gekennzeichnet, daß die Einrichtung (1) zur Befestigung und festen Halterung zum einen eine Basisplatte (7) aufweist, die entweder direkt oder unter Zwischenwirkung von zwei Armen (8) an der Nabe (2) oder an der Felge (3) des Fahrzeugrades (4) befestigt ist, und zum anderen eine zylindrisch ausgebildete Stützwelle (9) aufweist, die auf die erwähnte Basisplatte (7) aufgesetzt ist und mit einem kreisförmigen äußeren Anschlag (17) versehen ist.

3. Kraftfahrzeugradzierblende nach einem der Ansprüche 1 und 2, dadurch gekennzeichnet, daß das Blendenelement (5) in Form einer Lochscheibe ausgebildet ist, die in Höhe ihrer Zentralöffnung (10) einen Montagering (11) aufweist, wobei besagtes Blendenelement (5) außerdem einen Materialwulst (12) aufweist, der sich auf lediglich einer Seite seiner Oberfläche erstreckt.

4. Kraftfahrzeugradzierblende nach einem der Ansprüche 1 bis 3, dadurch gekennzeichnet, daß die Rotationsverbindung zwischen der Einrichtung 1 zur Befestigung und festen Halterung und dem Blendenelement (5) mittels eines Wälzlagers (13) realisiert ist.

5. Kraftfahrzeugradzierblende nach Anspruch 4, dadurch gekennzeichnet, daß der Außenring (18) des Wälzlagers (13) auf dem Montagering (11) des Blendenelementes (5) mittels eines inneren Sicherungsringes (19) befestigt ist, welcher mit einem inneren Anschlag (20) des besagten Montagerings (11) zusammenwirkt.

6. Kraftfahrzeugradzierblende nach einem der Ansprüche 4 und 5, dadurch gekennzeichnet, daß der Innenring (14) des Wälzlagers (13) auf der Stützwelle (9) mittels eines äußeren Sicherungsringes (16) befestigt ist, der in einer Rille (23) angeordnet ist und mit dem ringförmigen äußeren Anschlag (17) zusammenwirkt.

7. Kraftfahrzeugradzierblende nach Anspruch 6, dadurch gekennzeichnet, daß sie einen Deckel (21) aufweist, der abnehmbar in der Zentralöffnung (10) des Blendenelementes (5) angeordnet ist und es ermöglicht, eine äußere Ebene und ununterbrochene Oberfläche des besagten Blendenelementes (5) zu bilden.

8. Kraftfahrzeugradzierblende nach einem der Ansprüche 4 und 5, dadurch gekennzeichnet, daß die Anbringung des Wälzlagers (13) auf der Stützwelle (9) mittels eines im wesentlichen ringförmigen Zwischenstückes (26) realisiert ist, welches zwischen den Zwischenring (14) des Wälzlagers (13) und der Stützwelle (9) eingepaßt ist und an einer Seite von einer gelochten Scheibe (27) begrenzt ist, deren Durchmesser im wesentlichen dem Durchmesser des Zwischenringes (14) entspricht.

9. Kraftfahrzeugradzierblende nach Anspruch 8, dadurch gekennzeichnet, daß die Anbringung des Zwischenstückes (26) an der Stützwelle (9) zum einen mittels eines geschlitzten Federringes (28), der in einer äußeren Nut (23) der Stützwelle (9) angeordnet ist und sich partiell in einer Innennut (29) des Zwischenstückes (26) erstreckt, und zum anderen mittels einer Schraube (30) bewirkt ist, die in eine mit einem Gewinde versehene Öffnung (31) der Stützwelle (9) einfaßt.

10. Kraftfahrzeugradzierblende nach Anspruch 1, dadurch gekennzeichnet, daß die Animationseinrichtung (32) zum einen einen von der Felge (3) des Rades (4) angetriebenen und einen korrespondierenden Akkumulator ladenden elektrischen Generator und zum anderen einen Elektromotor aufweist, der von besagtem Akkumulator gespeist wird und - ggf. unter Zwischenschaltung eines Untersetzungsgetriebesystems - ein bewegliches dekoratives Element (33) in Bewegung setzt.

11. Kraftfahrzeugradzierblende nach Anspruch 1, dadurch gekennzeichnet, daß die Animationseinrichtung (32) im wesentlichen zum einen eine mehrere ineinander eingreifende Zahnräder aufweisende kinematische Eingangskette (34, 35, 36, 37, 38) aufweist, die eine Vorspannung einer Feder (39) einer Momentenbegrenzungseinrichtung, die über eine Rolle (40), von der Felge (30) des Rades (4) in Bewegung gesetzt wird, ermöglicht, und zum anderen eine im wesentlichen ein oder mehrere ineinander eingreifende Zahnräder aufweisende kinematische Ausgangskette (41, 42) aufweist, welche es ab einem Stillstand des Rades (4) ermöglicht, mittels der Feder (39) wenigstens ein ein dekoratives und/oder informatives Element (33) aufweisendes Teil (43) zu betätigen.

12. Kraftfahrzeugradzierblende nach einem der Ansprüche 1 bis 11, dadurch gekennzeichnet, daß die Vorrichtung (1) zur Befestigung und festen Halterung und auch das Blendenelement jeweils als gesonderte Teile ausgebildet sind und daß das Blendenelement (5) und ggf. der Deckel (21) vorzugsweise aus Terpolymeren von Acrylnitrit, Butadien und Styrol und unter der Bezeichnung ABS bekanntem Kunststoff bestehen.
